# EUROPEAN PATENT APPLICATION

(11) **EP 3 352 467 A1**
(43) Date of publication of application: **25.07.2018**
(21) Application number: 16846337.0
(22) Date of filing: 07.09.2016
(51) Int. Cl.: H04N 21/434, G09G 5/00, G09G 5/10, H04N 5/66, H04N 21/431

(54) **RECEPTION DEVICE, RECEPTION METHOD, AND PROGRAM**

(30) Priority: 18.09.2015 JP 2015185513
(71) Applicant: Sharp Kabushiki Kaisha, Sakai City, Osaka 590-8522 (JP)
(72) Inventor: SUZUKI, Hideki, Sakai City, Osaka 590-8522 (JP); AOKI, Midori, Sakai City, Osaka 590-8522 (JP); NISHIGAKI, Tomoo, Sakai City, Osaka 590-8522 (JP); MURASHIMA, Nobuyuki, Sakai City, Osaka 590-8522 (JP)
(74) Representative: Müller Hoffmann & Partner
(86) International application number: PCT/JP2016/076281
(87) International publication number: WO 2017/047466

(57) **Abstract**

Provided is a reception device that allows a viewer to grasp that luminance may increase depending on content to be displayed. An acquisition unit that acquires, from service information of content, luminance information of a video included in the content; a luminance determination unit that determines, on the basis of the luminance information, whether or not luminance of the content is higher than a reference value; a notification information generation unit that generates, in a case where the luminance is higher than the reference value as a result of determination of the luminance determination unit, notification information that is information about the luminance; and an output unit that outputs the notification information are included.

## Description

### Technical Field

The present invention relates to a reception device, a reception method, and a program.

This application claims priority based on Japanese Patent Application No. 2015-185513 filed in Japan on September 18, 2015, the content of which is incorporated herein.

### Background Art

With development of a sensor technique and an image processing technique, interest in an HDR (High Dynamic Range; also referred to as a wide-band dynamic range) video is enhanced and it is attempted to exploit the HDR video. The HDR video is a video that has luminance in a wider range than that of a normal video. On the other hand, the normal video is called an LDR (Low Dynamic Range) video or an SDR (Standard Dynamic Range) video. The HDR video is expected to be introduced in broadcast service in the future.

However, the HDR video is not always provided in the broadcast service. It is expected that the HDR video or the SDR video is used properly depending on a program. Thus, a reception device is required to cope with a change of a luminance range as a program is switched.

Then, a technical requirement under which a transmission device adds luminance information which indicates whether a luminance range is the HDR or the SDR to content to be broadcasted and a reception device sets various parameters on the basis of the luminance information has been standardized. The parameters include peak luminance, a γ value, contrast, and the like, for example. The parameters are set aiming that a video that is adjusted to have luminance and contrast as intended by a transmission side is viewed on a reception side.

As a video display device capable of displaying such an HDR video, there is a video display device described in PTL 1, for example. In the video display device described in PTL 1, by using a given feature quantity related to brightness of an input video signal, a light emission detecting portion defines a light emission quantity of the video signal in advance on the basis of a relation between the light emission quantity and the feature quantity, and detects the light emission quantity from the feature quantity for each frame of the input video signal. On the basis of a given condition, a black detection portion detects an amount of black display from the input video signal. A backlight luminance stretch portion stretches light source luminance of a backlight in accordance with the detected light emission quantity, and, at this time, limits an amount of stretching of luminance of the backlight on the basis of the amount of black display detected by the black detection portion.

### Citation List

### Patent Literature

PTL 1: Japanese Patent No. 5165802

### Summary of Invention

### Technical Problem

In the broadcast service, however, when the luminance range corresponding to the SDR video is simply changed to the luminance range corresponding to the HDR video as the program is switched and display is performed on a screen, a viewer who views the program may be made uncomfortable or his/her physical condition may be affected because of photosensitivity or the like. Here, in a case where the viewer does not know that the luminance increases upon switching from the SDR video to the HDR video, the viewer may be made uncomfortable or his/her physical condition may be affected because of photosensitivity or the like as well.

In this respect, PTL 1 does not describe that a reception device has a configuration in which a viewer recognizes that the luminance may increase depending on content.

The invention has been made in view of such circumstances and an object thereof is to provide a reception device, a reception method, and a program that allow a viewer to grasp that luminance may increase depending on displayed content.

### Solution to Problem

In order to solve the aforementioned problems, the invention includes: an acquisition unit that acquires, from service information of content, luminance information of a video included in the content; a luminance determination unit that determines, on a basis of the luminance information, whether or not luminance of the content is higher than a reference value; a notification information generation unit that generates, in a case where the luminance is higher than the reference value as a result of determination of the luminance determination unit, notification information that is information about the luminance; and an output unit that outputs the notification information.

### Advantageous Effects of Invention

According to an embodiment of the invention, a viewer is able to grasp that luminance may increase depending on displayed content.

### Brief Description of Drawings

[Fig. 1] Fig. 1 is a schematic block diagram illustrating a configuration of a broadcast system according to Embodiment 1.
[Fig. 2] Fig. 2 illustrates an example of a relationship between a signal level and luminance.
[Fig. 3] Fig. 3 illustrates another example of a relationship between a signal level and luminance.
[Fig. 4] Fig. 4 is a schematic block diagram illustrating a configuration of a transmission device according to Embodiment 1.
[Fig. 5] Fig. 5 illustrates an example of a data structure of an MPT.
[Fig. 6] Fig. 6 illustrates an example of a data structure of a video component descriptor.
[Fig. 7] Fig. 7 illustrates an example of setting of a luminance flag.
[Fig. 8] Fig. 8 illustrates an example of a data structure of an MH-EIT.
[Fig. 9] Fig. 9 is a schematic block diagram illustrating a configuration of a reception device according to Embodiment 1.
[Fig. 10] Fig. 10 illustrates an example of a time change of a luminance range of a video.
[Fig. 11] Fig. 11 is a flowchart indicating control for a luminance range according to the present embodiment.
[Fig. 12] Fig. 12 is a flowchart indicating processing for performing display according to a response to a test video according to the present embodiment.
[Fig. 13] Fig. 13 is a conceptual view for explaining an example of information displayed on a display unit 15.
[Fig. 14] Fig. 14 is a conceptual view for explaining an example of information displayed on the display unit 15.
[Fig. 15] Fig. 15 is a view for explaining a case where luminance when HDR video data is displayed is decided in accordance with an instruction of a viewer.
[Fig. 16] Fig. 16 is a view for explaining a case where HDR video data is displayed with a set upper limit value of luminance.
[Fig. 17] Fig. 17 is a view for explaining a case where a reaction of the viewer to photic stimulation is obtained.
[Fig. 18] Fig. 18 is a view for explaining an example of a screen for setting luminance when video data is displayed on the display unit 15.
[Fig. 19] Fig. 19 is a view for explaining a case where an inquiry concerning whether or not there is a viewer who has photosensitivity among users of the reception device 10 is made.

### Description of Embodiments

Hereinafter, an embodiment of the invention will be described with reference to the drawings.

### [Embodiment 1]

First, an outline of a broadcast system 1 according to Embodiment 1 of the invention will be described.

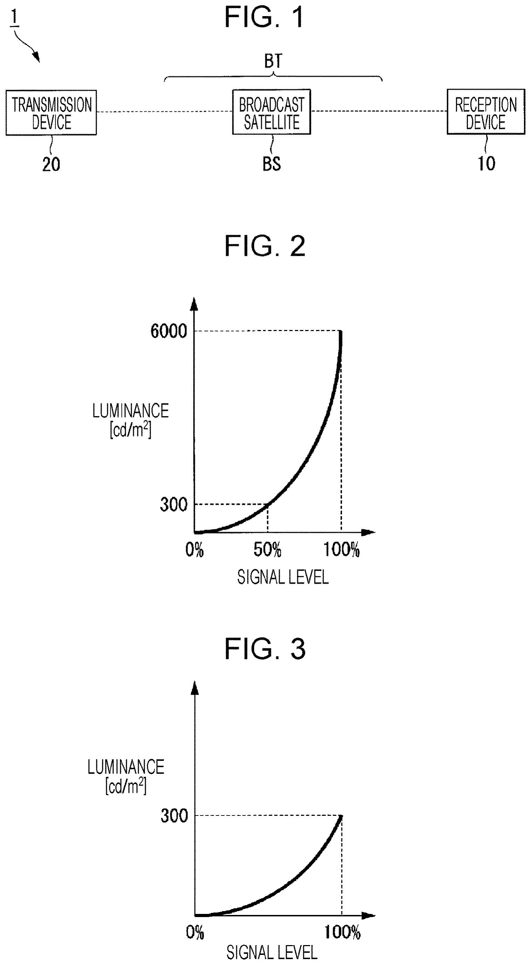

Fig. 1 is a schematic block diagram illustrating a configuration of the broadcast system 1 according to the present embodiment.

The broadcast system 1 is configured by including a transmission device 20 and a reception device 10.

The transmission device 20 transmits broadcast program data, which indicates a broadcast program, to a reception device via a broadcasting transmission path BT. The broadcasting transmission path BT is a transmission path in which the broadcast program data is unilaterally and simultaneously transmitted to multiple unspecified reception devices 10. The broadcasting transmission path BT is, for example, a broadcast wave that has a given frequency band. The broadcasting transmission path BT may be configured by including a broadcast satellite BS that relays the broadcast wave. In a part of the broadcasting transmission path BT, a network, for example, a dedicated line or a VPN (Virtual Private Network) may be included. The reception device 10 receives broadcast program data that is transmitted via the broadcasting transmission path BT. The reception device 10 displays a video based on video data that constitutes the received broadcast program data. The reception device 10 is electronic equipment, for example, such as a television reception device, which is able to receive broadcast program data and display a video related to the received broadcast program data. Though the numbers of transmission devices 20 and reception devices 10 are typically multiple, description will be given below by assuming that each of the numbers is one. A case where the broadcast system 1 uses an MMT (MPEG Media Transport) system as a media transport system is taken as an example.

The broadcast system 1 is able to broadcast a plurality of broadcast programs whose dynamic ranges of luminance are different from each other. In other words, an HDR broadcast program and an SDR broadcast program are broadcasted in the broadcast system 1. The HDR broadcast program is a broadcast program in which an HDR video whose luminance range is an HDR is included as a component. The SDR broadcast program is a broadcast program in which an SDR video whose luminance range is an SDR is included as a component. Video data indicating the HDR video and video data indicating the SDR video are respectively called HDR video data and SDR video data.

### (Luminance of video)

There are two types of luminance; optical luminance and image luminance. The optical luminance is one of physical amounts indicating brightness of a light source. The optical luminance is used for representing brightness of a display, for example. In the present embodiment, a luminance range of 0 to 6000 cd/m² is referred to as the HDR and a luminance range of 0 to 300 cd/m² is referred to as the SDR, for example. That is, the HDR indicates a wider dynamic range of the optical luminance than that of the SDR. Note that, the luminance ranges of the HDR and the SDR are not limited to the aforementioned ranges, and may be defined as any ranges in accordance with the broadcast system, for example. Hereinafter, the dynamic range of the optical luminance is simply called a dynamic range in some cases. The image luminance means luminance represented by a signal level indicating brightness of a video or a relative value thereof. Hereinafter, each of the optical luminance and the image luminance is simply called luminance in some cases.

The broadcast system 1 transmits broadcast program data that includes HDR video data or SDR video data. The HDR video data is constituted by a video format defined by the Rec. ITU-R (International Telecommunication Union-Radiocommunication Sector) BT. 2020, for example. The video format is called an HDR format. The HDR format is able to be applied also to the SDR video data and used for a UHDTV (Ultra-High Definition Television). A case where the video data is data represented by a color space of YCbCr will be described below, for example. In this case, a video source may be data represented by another color space such as a color space of RGB.

In the HDR format, a signal level of the image luminance and the HDR as the luminance range are associated with each other. For example, as illustrated in Fig. 2, in the HDR format, the signal level of the image luminance of 0 to 50% corresponds to the optical luminance of 0 to 300 cd/m², and the signal level of the image luminance of 50 to 100% corresponds to the optical luminance of 300 to 6000 cd/m², for example. Thus, in the HDR video data transmitted by the HDR format, the signal level of the image luminance may take a range of 0 to 100%. Hereinafter, a possible range of the signal level for video data is referred to as a level range. In the present example, a minimum value (for example, black level) and a maximum value (for example, nominal peak) of a signal value of each pixel that constitutes the HDR video data respectively correspond to 0% and 100%. In a case where the signal value of each pixel is represented by 12 bits, the signal values of the black level and the nominal peak are respectively 64 and 3840, for example.

The SDR video data has a video format defined by the Rec. ITU-R BT. 709, for example. The video format is called an SDR format. The SDR format is used for an HDTV (High Definition Television). In the SDR format, a signal level of the image luminance and the SDR are associated with each other. For example, as illustrated in Fig. 3, in the SDR format, the level range of 0 to 100% corresponds to the optical luminance of 0 to 300 cd/m². The signal level of the image luminance of the SDR video data may take a range of 0 to 100%. In the present example, a minimum value and a maximum value of a signal value of each pixel that constitutes the SDR video data respectively correspond to 0% and 100%. In a case where the signal value of each pixel is represented by 10 bits, the signal values of the black level and the nominal peak are respectively 16 and 960, for example.

In the following description, a case where the optical luminance corresponding to a range of 0 to 50% in the range of the image luminance of the HDR video mainly has a range (0 to 300 cd/m²) of the optical luminance corresponding to the range (0 to 100%) of the image luminance of the SDR video is taken as an example.

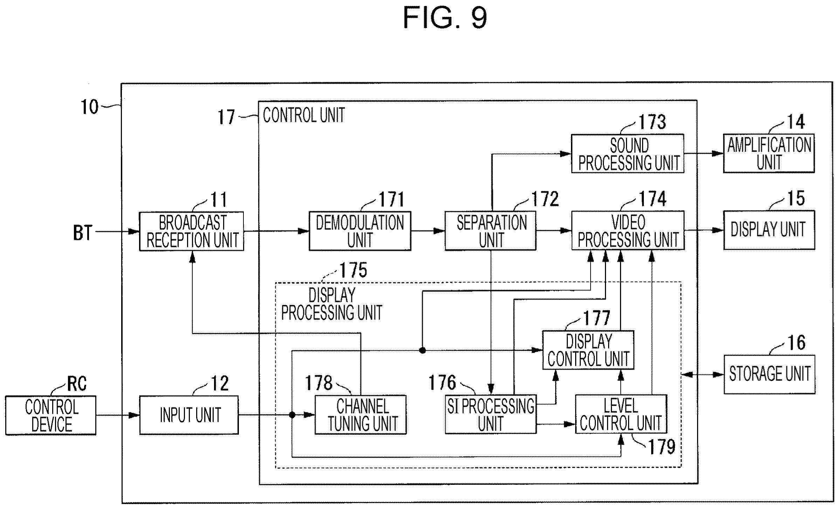

Next, a display unit 15 (Fig. 9) included in the reception device 10 will be described. The display unit 15 may be constituted as a display device separate from the reception device 10. The display unit 15 is a display capable of displaying videos of both the HDR and the SDR as the range of the optical luminance. Specifically, in a case where the signal level of the image luminance in an HDR video signal that is input is 0 to 50 [%], the display unit 15 performs display with the optical luminance of 0 to 300 [cd/m²]. In a case where the signal level is 50 to 100 [%], the display unit 15 performs display with the optical luminance of 300 to 6000 [cd/m²]. Specifically, the display unit 15 performs display with the optical luminance according to the signal level of the image luminance on the basis of an electro optical transfer function (EOTF) exemplified in Fig. 2, for example. The EOTF is a function that describes a correspondence relation between the signal value of the luminance input to the display and the luminance with which the display performs display.

### (Outline of processing)

Next, an outline of processing from when video data for a broadcast program is captured till when a video is displayed on the display unit 15 will be described. Here, for example, it is set that an image capturing device (not illustrated) for video data captures objects SU1 and SU2 and pieces of optical luminance of the objects SU1 and SU2 are respectively 200 and 2000 [cd/m²]. While the optical luminance of the object SU1 is in the range of the SDR, the optical luminance of the object SU2 exceeds an upper limit of the SDR. As a component of broadcast program data, the transmission device 20 transmits, to the reception device 10, the captured video data as SDR video data or HDR video data. The reception device 10 acquires the video data from the broadcast program data received from the transmission device 20 and outputs the acquired video data to the display unit 15.

In a case where the video data is the SDR video data, a signal level of the object SU1 is in a range of 0 to 100%. On the other hand, a signal level corresponding to the optical luminance of the object SU2 exceeds 100% and is thus 100%. Therefore, while the display unit 15 displays the object SU1 with the optical luminance within a range of 200 cd/m², the optical luminance with which the object SU2 is displayed is suppressed to an upper limit thereof, 300 cd/m².

In a case where the video data is the HDR video data, the signal levels of the objects SU1 and SU2 are within ranges of 0 to 50% and 50 to 100%. Therefore, the display unit 15 displays the objects SU1 and SU2 respectively with pieces of optical luminance of 200 and 2000 [cd/m²] that are equal to the pieces of optical luminance obtained by the capturing.

As described above, in the HDR video displayed by HDR display, the luminance range in which the optical luminance obtained by the capturing corresponds to the signal level of the image luminance is wider than that of the SDR video. Thus, the object SU1 and the object SU2 are represented with different optical luminance.

In a case where the luminance range of the video is switched between the HDR and the SDR, the reception device 10 changes, with respect to the display unit 15, setting of a range of the signal level and the EOTF which indicates a relationship between signal luminance and optical luminance. Since the luminance range of the video that is able to be represented is switched by changing the setting, the luminance of the video changes. The change in the luminance of the video may bring a cause of making a viewer uncomfortable or affecting his/her physical condition because of photosensitivity or the like.

Then, the reception device 10 according to the present embodiment acquires, from service information of content, luminance information of a video included in the content, and determines whether or not luminance of the content is higher than a reference value on the basis of the acquired luminance information, and when the luminance is higher than the reference value as a result of the determination, generates and outputs notification information that is information about the luminance.

The luminance information here may be the luminance, that is, the aforementioned luminance range of the optical luminance or a contrast ratio. As the reference value, any decided value may be used or the luminance range of the SDR may be used. In a case where the luminance range of the SDR is used, a maximum value in the luminance range of the SDR is used as the reference value, and whether or not the luminance (luminance range) of the content has luminance (luminance range) exceeding the maximum value is determined. As the information about the luminance, information indicating that video data is displayed with luminance (luminance range) greater than the luminance range of the SDR may be used. As an aspect of a method of outputting the notification information, it is only required to allow the viewer to recognize the notification information, and a message indicating the notification information may be displayed through outputting to a display device (display unit 15), a message may be transmitted by sound through outputting to a speaker, or an instruction to light up a given lamp may be output to the lamp or the like.

As a result, the viewer is able to grasp in advance that the video data may be displayed in the luminance range of the HDR.

### (Configuration of transmission device)

Next, a configuration of the transmission device 20 according to the present embodiment will be described.

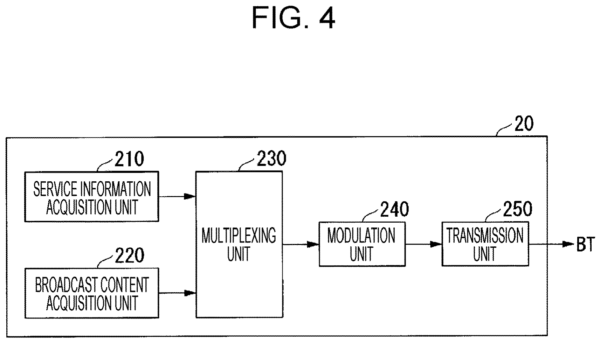

Fig. 4 is a schematic block diagram illustrating the configuration of the transmission device 20 according to the present embodiment.

The transmission device 20 multiplexes broadcast program data and service information and transmits, on a broadcast wave, the multiplexed data obtained through the multiplexing. The transmission device 20 is configured by including a service information acquisition unit 210, a broadcast content acquisition unit 220, a multiplexing unit 230, a modulation unit 240, and a transmission unit 250.

The service information acquisition unit 210 acquires service information. The service information is information about provision of broadcast service, such as a provision form or configuration of a broadcast program. The service information is, for example, MMT-SI (Service Information) in the MMT system. The MMT-SI information includes, for example, an MPT (MMT Package Table) and an MH-EIT (MH-Event Information Table). The MPT is a table that includes information indicating an asset that is a component of the broadcast program, that is, a list of videos or sounds, or a providing condition thereof. The MH-EIT is a table that includes information about the program, for example, information indicating a name of the program, broadcast date and time, explanation for broadcast content, or the like. A luminance flag indicating luminance information of the video to be broadcasted is included in the MPT, for example. In other words, the luminance flag indicates whether the luminance range is the HDR or the SDR. The MH-EIT (MH-Event Information Table) that is a table for transmitting information about the program, such as a name of the program, broadcast date and time, or explanation for broadcast content is included. The service information acquisition unit 210 outputs the acquired service information to the multiplexing unit 230 every given time (for example, 0.1 to 0.5 ms). The service information is updated in accordance with progress of the program, but when not updated, the same service information may be iterated multiple times. Thereby, the broadcast program is able to be presented on the basis of a broadcast signal received at any time point by the reception device 10.

The broadcast content acquisition unit 220 acquires broadcast program data. The broadcast program data is data indicating content of the broadcast program. The broadcast program data includes, for example, video data, sound data, and the like that are provided in the broadcast program. The broadcast content acquisition unit 220 outputs the acquired broadcast program data to the multiplexing unit 230.

The multiplexing unit 230 multiplexes the service information input from the service information acquisition unit 210 and the broadcast program data input from the broadcast content acquisition unit 220 to generate multiplexed data. The multiplexing unit 230 outputs the multiplexed data that is generated to the modulation unit 240.

The modulation unit 240 modulates the multiplexed data input from the multiplexing unit 230, generates a broadcast signal having a given broadcast frequency band, and outputs the generated broadcast signal to the transmission unit 250.

The transmission unit 250 outputs, to the broadcasting transmission path BT, the broadcast signal input from the modulation unit 240. Thereby, the broadcast signal that carries the multiplexed data in which the broadcast program data and the service information are multiplexed is transmitted via the broadcasting transmission path BT. The broadcast signal is transmitted as a broadcast wave, for example.

### (MPT)

Next, a data structure of an MPT will be described.

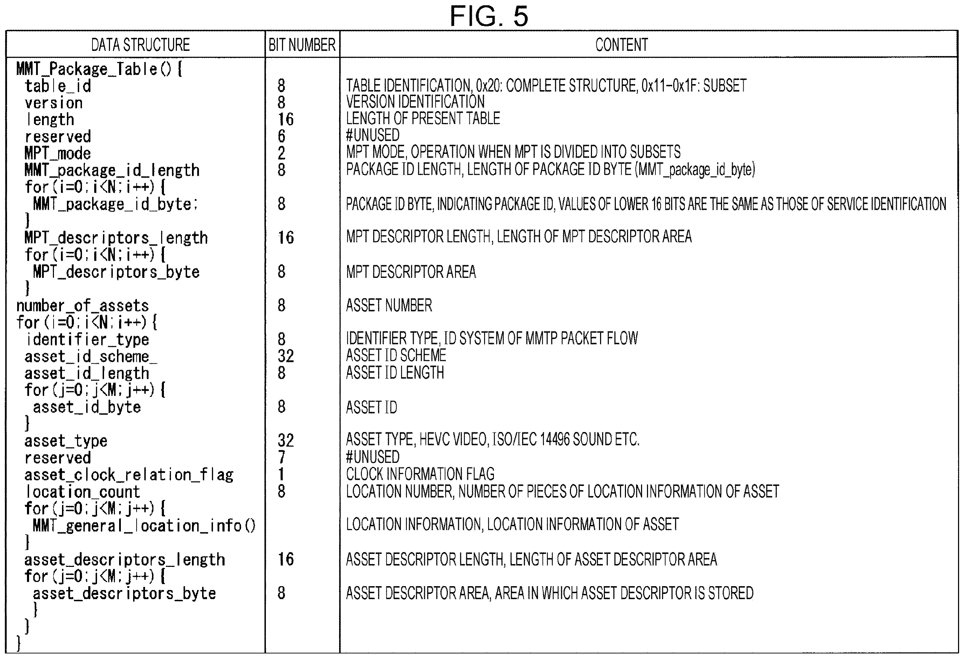

Fig. 5 illustrates an example of the data structure of the MPT. The MPT is configured by including an asset type (asset_type) and an asset descriptor area (asset_ descriptors_byte) of each asset. The asset type (asset_type) is information indicating a type of an asset. For example, an asset in which "hvc1" is described as the asset type indicates a video and an asset in which "mp4a" is described as the asset type indicates sound.

The asset descriptor area is an area in which a descriptor describing information about an asset is stored. In the asset descriptor area, a video component descriptor (Video_Component_Descriptor) is described, for example.

### (Video component descriptor)

Next, a video component descriptor will be described.

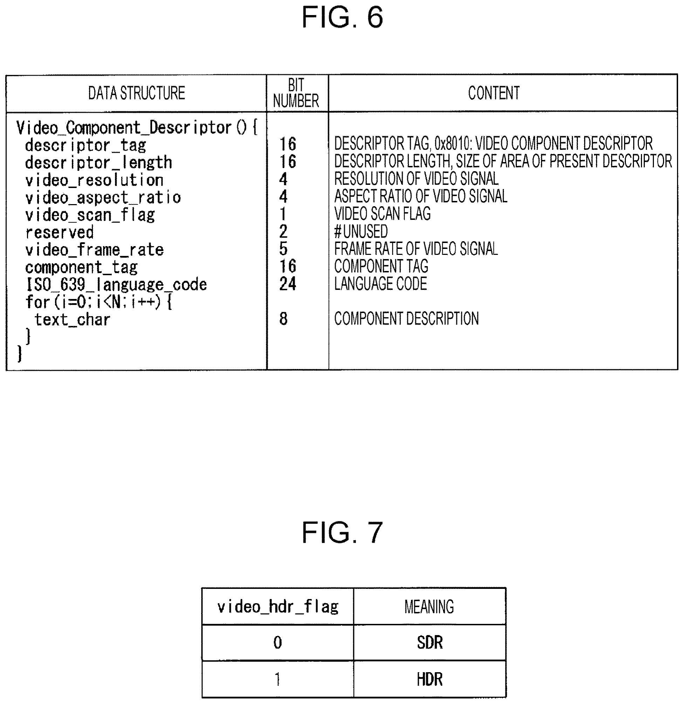

Fig. 6 illustrates an example of a data structure of the video component descriptor. The video component descriptor is a descriptor indicating a parameter or explanation related to a video component. The video component descriptor includes an unused parameter (reserved) and component description (text_char). In the present embodiment, a luminance flag as luminance information is described in either the unused parameter (reserved) or the component description (text_char). With the luminance flag, whether the luminance range of a video to be broadcasted is the HDR or the SDR is specified.

### (Luminance flag)

Fig. 7 illustrates an example of setting of a value of the luminance flag.

The luminance flag (video_hdr_flag) has 1-bit information and may have a value of 1 or 0 as exemplified in Fig. 7. The value of 0 indicates that the luminance range is the SDR and the value of 1 indicates that the luminance range is the HDR. The luminance range specified with the luminance flag is set to each of a broadcast program, a segment (also called a session) that constitutes one broadcast program, a CM included in one broadcast program, and the like in some cases.

### (MH-EIT)

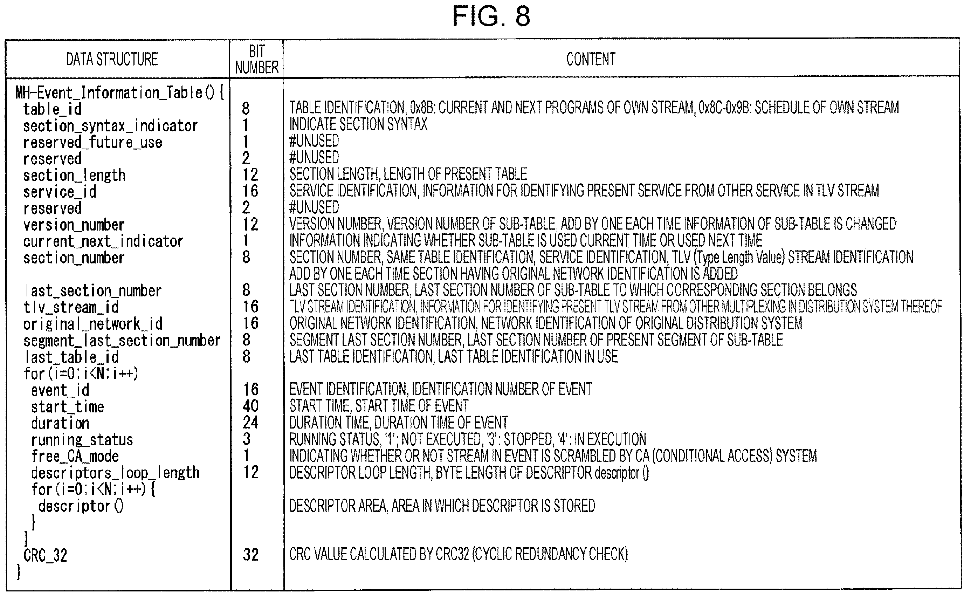

Next, an MH-EIT will be described. Fig. 8 illustrates an example of a data structure of the MH-EIT.

In the example illustrated in Fig. 8, the MH-EIT (MH-Event_Information_Table()) includes an event identification (event_ID), a start time (start_time), and a duration time (duration). The event identification indicates an identification number of an event. Specifically, the event identification indicates identification information of a program, for example. The start time indicates a start time of the event. That is, the start time indicates a start time (date and time) of the program. The duration time indicates a duration time of the event. That is, the duration time indicates a length of broadcast time of the program.

The MH-EIT also includes a descriptor area (descriptor ()) of each event identification. The descriptor area is an area in which a descriptor is stored. The MH-EIT is able to include a video component descriptor, for example. The descriptor area is also able to include an MH-extended event descriptor (MH-Extemded_Event_Descriptor ()). In the MH-extended event descriptor, detailed information about each program is described. The detailed information may include, in addition to a performer, a creator, and the like, information of each segment (also called a session) that is a part of a program, such as a provision start time, a duration time, a luminance flag, and the like.

### (Reception device)

Next, a configuration of the reception device 10 according to the present embodiment will be described.

Fig. 9 is a schematic block diagram illustrating the configuration of the reception device 10 according to the present embodiment.

The reception device 10 is configured by including a broadcast reception unit 11, an input unit 12, an amplification unit 14, a display unit 15, a storage unit 16, and a control unit 17.

The broadcast reception unit 11 receives, among broadcast signals transmitted from the transmission device 20 via the broadcasting transmission path BT, a broadcast signal that is transmitted on a channel specified by a channel tuning signal from a channel tuning unit 178 of the control unit 17. The broadcast reception unit 11 is configured by including a tuner that receives a broadcast wave, for example. The tuner receives a broadcast wave of a frequency band corresponding to the channel specified by the channel tuning signal. The broadcast reception unit 11 outputs the received broadcast signal to a demodulation unit 171 of the control unit 17.

To the input unit 12, an operation signal generated by an operation of a user is input. The input unit 12 is configured by including an infrared interface that receives an operation signal from a control device (remote controller) RC by an infrared ray, for example. The operation signal specifies information of on/off of a power supply, a channel on which a broadcast wave is received, a sound volume, luminance, contrast, or the like, for example. The input unit 12 outputs the operation signal to the control unit 17. Note that, the input unit 12 is constituted by including a physical member for receiving the operation of the user, for example, such as various buttons and knobs, and may generate an operation signal according to the operation.

The amplification unit 14 reproduces sound based on sound data input from a sound processing unit 173 of the control unit 17. The amplification unit 14 is configured by including a speaker, for example.

The display unit 15 reproduces a video based on video data input from a video processing unit 174 of the control unit 17. The display unit 15 is a display capable of displaying an HDR video based on HDR video data and an SDR video based on SDR video data as described above.

The storage unit 16 stores various data such as setting data used in the control unit 17 and data acquired by the control unit 17. The storage unit 16 is configured by including various storage media such as a RAM (Random Access Memory) and a ROM (Read-only Memory). The storage unit 16 may be configured by including a storage medium (for example, BD (Blu-ray (registered trademark) Disc)) in which received video data of a broadcast program or video data of content of a movie or the like produced in advance is stored. In the storage unit 16, broadcast program data and service information which is multiplexed with the broadcast program data may be stored in association with each other.

The control unit 17 performs various processing related to an operation of the reception device 10. The control unit 17 is configured by including the demodulation unit 171, a separation unit 172, the sound processing unit 173, the video processing unit 174, and a display processing unit 175. The display processing unit 175 is configured by including an SI processing unit 176, a display control unit 177, the channel tuning unit 178, and a level control unit 179. The control unit 17 is configured by including a control circuit such as a CPU (Central Processing Unit). The control unit 17 may realize a function of the demodulation unit 171, the separation unit 172, the sound processing unit 173, the video processing unit 174, the display processing unit 175, or the like by executing processing specified by a command indicated by a control program read out from the storage unit 16.

The demodulation unit 171 demodulates a broadcast signal input from the broadcast reception unit 11 and generates multiplexed data. A demodulation scheme used by the demodulation unit 171 is a demodulation scheme according to a modulation scheme used in the modulation unit 240 (Fig. 4). The demodulation unit 171 outputs the multiplexed data that is generated to the separation unit 172.

The separation unit 172 separates broadcast program data and service information from the multiplexed data input from the demodulation unit 171. The separation unit 172 also separates sound data and video data from the broadcast program data. The separation unit 172 outputs the separated sound data to the sound processing unit 173 and outputs the separated video data to the video processing unit 174. The separation unit 172 outputs the separated service information to the display processing unit 175.

The sound processing unit 173 decodes the sound data (that has been coded) input from the separation unit 172 and generates decoded sound data. A sound decoding scheme used by the sound processing unit 173 is a sound decoding scheme (for example, MPEG-4 audio) according to a coding scheme used for coding of the sound data. The sound processing unit 173 outputs the sound data generated by decoding to the amplification unit 14.

The video processing unit 174 decodes the video data (that has been coded), which is input from the separation unit 172, in a luminance range indicated by luminance information input from the SI processing unit 176 and generates decoded video data. A video decoding scheme used by the video processing unit 174 is a video decoding scheme (for example, HEVC: High Efficiency Video Coding) according to a coding scheme used for coding of the video data. In the following description, a video indicated by the video data input from the separation unit 172 is called a broadcast video in some cases. The video processing unit 174 adjusts a display manner of the broadcast video under control of the display processing unit 175. As the display manner, for example, presence/absence of various graphic screens (such as a caution screen, a menu screen, and a guide screen), luminance or contrast of a broadcasted video, that is, of a video indicated by generated video data, or the like is adjusted. The video processing unit 174 superimposes a graphic screen indicated by graphic screen data input from the video processing unit 174 with the decoded video and generates the superimposed video as an adjusted video.

In a case where luminance of the video data is higher than a reference value as a result of determination of the level control unit 179, the video processing unit 174 generates notification information (for example, any of the graphic screens described above) that is information about the luminance. When an instruction to increase an upper limit value of the luminance with which the video data is displayed is input from the input unit 12 after the notification information is output to the display unit 15, the video processing unit 174 causes the display unit 15 to display the video data with the luminance according to the input instruction. Here, the reference value is information used as a reference for determining whether or not to be the HDR, and a value input from the viewer (user) via the input unit 12 may be used, for example, or at least any one of information indicating the upper limit value of the luminance with which the video data is displayed and information stored in the storage unit 16 in advance may be used. The information specifying the upper limit value may be specified from the viewer (user) via the input unit 12, or may be included in the service information and applied as the reference value by receiving the service information. In a case where the viewer specifies the reference value, luminance that the viewer does not feel unpleasant is able to be set as the reference value. In a case where the information indicating the upper limit value of the luminance with which the video data is displayed is used, for example, a maximum value in the luminance range of the SDR is able to be used. This makes it possible to determine whether or not video data whose luminance exceeds to be higher than the range of the SDR is input.

The video processing unit 174 displays a test video for obtaining a reaction of the viewer to photic stimulation or photosensitivity received from a displayed video. In a case where a response obtained from the viewer via the input unit 12 is a response indicating that the viewer is able to view content with the luminance higher than the reference value, the video processing unit 174 causes the display unit 15 to display content with the luminance higher than the reference value.

For a pixel whose signal level is in a luminance range indicated by luminance range setting input from the level control unit 179 among pixels indicated by the video data, the video processing unit 174 keeps the signal level without change. For a pixel whose signal level is greater (or smaller) than the luminance range indicated by the luminance range setting input from the level control unit 179 among pixels indicated by the video data, the video processing unit 174 sets the signal level as a maximum value (or a minimum value) of the signal level of each luminance range. The video processing unit 174 outputs video data that indicates the adjusted video to the display unit 15.

The display processing unit 175 performs processing related to display of a video. The display processing unit 175 is configured by including the SI processing unit 176, the display control unit 177, the channel tuning unit 178, and the level control unit 179.

The SI processing unit 176 analyzes service information input from the separation unit 172. Specifically, the SI processing unit 176 extracts a video component descriptor of an MPT from the service information and acquires luminance information by referring to a value set to a luminance flag. The SI processing unit 176 outputs the acquired luminance information to the video processing unit 174, the display control unit 177, and the level control unit 179. The SI processing unit 176 extracts an MH-EIT from the service information and outputs program information indicated by the extracted MH-EIT to the display control unit 177 and the level control unit 179.

The display control unit 177 controls whether to display a graphic screen to be displayed on the display unit 15, acquisition or changing of the graphic screen, and the like on the basis of one or both of the operation signal from the input unit 12 and the information from the SI processing unit 176. As the graphic screen, there is a caution screen, a menu screen, or the like, for example. As the menu screen, there is a video setting screen for setting luminance or contrast for display on the display unit 15. As the caution screen, there is a luminance change caution screen for notifying a change, that is, expansion or reduction of the luminance range. The luminance change caution screen for notifying expansion of the luminance range may include, for example, a message of "Video is made brighter suddenly!" or the like as a message for giving a caution about a sudden increase in the luminance due to expansion of the luminance range. Graphic screen data indicating various graphic screens is stored in advance in the storage unit 16.

As the graphic screen, there is a screen that is displayed in accordance with a change of the luminance range of the broadcast video or a screen whose content varies depending on the luminance range of the broadcast video. For example, when the luminance range indicated by luminance information changes, the display control unit 177 starts display of the luminance change caution screen and stops (non-display) the display after a given time (for example, 5 seconds) has lapsed. The display control unit 177 may stop the display when an instruction to stop the display is input. When starting the display of the luminance change caution screen, the display control unit 177 reads out, from the storage unit 16, luminance change caution screen data for indicating the luminance change caution screen and outputs the luminance change caution screen data that is read out to the video processing unit 174.

As the video setting screen, there is an HDR video setting screen to be displayed when the luminance range of the broadcast video is the HDR or an SDR video setting screen to be displayed when the luminance range of the broadcast video is the SDR. This is because a range of luminance and a range of contrast that are able to be set vary when the luminance range changes. When the luminance range indicated by the luminance information is the HDR and an operation signal to specify display of the video setting screen is input from the input unit 12, the display control unit 177 reads out HDR video setting screen data from the storage unit 16. The display control unit 177 outputs the HDR video setting screen data that is read out to the video processing unit 174. When the luminance range indicated by the luminance information is the SDR and an operation signal to specify display of the video setting screen is input from the input unit 12, the display control unit 177 reads out SDR video setting screen data from the storage unit 16. The display control unit 177 outputs the SDR video setting screen data that is read out to the video processing unit 174. That is, in accordance with the change of the luminance range, the display control unit 177 changes the video setting screen to be displayed.

As described above, when the level control unit 179 determines that the luminance range changes, the display control unit 177 causes the display unit 15 to display the luminance change caution screen according to the luminance range after the change. When an operation signal to specify display of the video setting screen is input to the display control unit 177, the display control unit 177 causes the display unit 15 to display the video setting screen according to the luminance range after the change.

The channel tuning unit 178 identifies a channel, on which a broadcast signal is received, by the operation signal input from the input unit 12. The channel tuning unit 178 generates a channel tuning signal to specify the identified channel and outputs the generated channel tuning signal to the broadcast reception unit 11.

The level control unit 179 controls a signal level of the broadcast video on the basis of luminance information and program information that are input from the SI processing unit 176. The level control unit 179 determines whether or not the luminance of video data included in the broadcast program data is higher than a reference value on the basis of the luminance information input from the SI processing unit 176.

Note that, the video data transmitted by the transmission device 20 may be obtained by multiplying a signal value by an OETF (Opto-Electronic Transfer Function) in advance in order to offset characteristics of the EOTF (reference EOTF) in a specific display device. The level control unit 179 uses a given correction coefficient to correct a signal value that is limited, so that a last output value (luminance) from the display unit 15 has a constant magnification with respect to an original input value of the video data. The correction is called gamma correction in some cases. The correction coefficient may be provided as a conversion table indicating a relationship between the input value and the output value. The correction coefficient may be different between the SDR and the HDR. For example, the level control unit 179 may switch the correction coefficient of the SDR to the correction coefficient of the HDR at a time t₃ when it is instructed to change the luminance range from the SDR to the HDR. The level control unit 179 may switch the correction coefficient of the HDR to the correction coefficient of the SDR at a time t₄ when it is instructed to change the luminance range from the HDR to the SDR.

The level control unit 179 uses a correction coefficient corresponding to a signal value whose maximum value is limited and corrects the signal value.

### (Time change of luminance range)

Next, an example of a time change of a luminance range of a video that constitutes a broadcast program will be described.

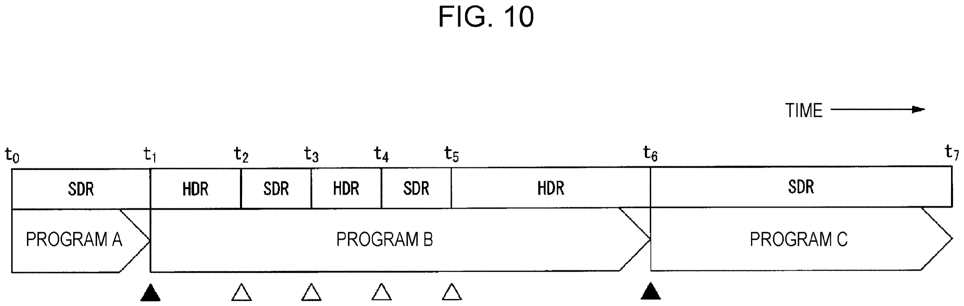

Fig. 10 illustrates an example of a time change of a luminance range of a video.

In the example illustrated in Fig. 10, a program A that includes an SDR video is broadcasted from a time t₀ to a time t₁, a program B is broadcasted from the time t₁ to a time t₆, and a program C that includes an SDR video is broadcasted from the time t₆ to a time t₇. In the program B, the luminance range of the video is switched. The luminance range may change as a session (also called a segment) that is a part of the program is switched. In the example illustrated in Fig. 10, the luminance range is switched from the HDR to the SDR at times t₂, t₄, and t₆ and switched from the SDR to the HDR at times t₃ and t₅.

Next, control for a luminance range in which video data is displayed according to the present embodiment will be described.

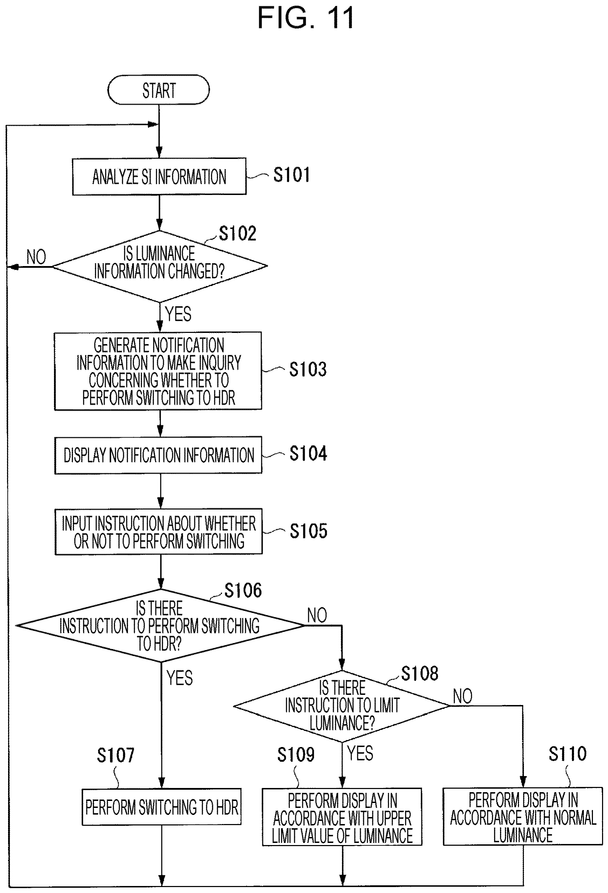

Fig. 11 is a flowchart indicating control for a luminance range according to the present embodiment.

(Step S101) The separation unit 172 separates service information from multiplexed data that is carried by a received broadcast signal. The SI processing unit 176 analyzes the separated service information and acquires luminance information and program information. Then, the procedure proceeds to processing of step S102.

(Step S102) The level control unit 179 determines whether or not the luminance range indicated by the luminance information changes from the SDR to the HDR. When it is determined that there is a change from the SDR to the HDR (step S102, YES), a determination result is output to the video processing unit 174 and the procedure proceeds to processing of step S103. When it is determined that there is no change from the SDR to the HDR (step S102, NO), the procedure returns to processing of step S101.

(Step S103) The video processing unit 174 generates notification information to make an inquiry concerning whether or not to perform switching to the HDR. Then, the procedure proceeds to processing of step S104.

(Step S104) The video processing unit 174 causes the display unit 15 to display the generated notification information. Then, the procedure proceeds to processing of step S105.

(Step S105) The video processing unit 174 acquires an instruction about whether or not to perform switching to the HDR, which is input from the input unit 12. In a case where it is determined that an instruction to perform switching to the HDR is input (step S106, YES), the video processing unit 174 causes the display unit 15 to display the video data with luminance specified by the level control unit 179. Then, the procedure proceeds to processing of step S101.

On the other hand, in a case where the instruction does not indicate switching to the HDR (step S106, NO), the video processing unit 174 proceeds to processing of step S108.

(Step S108) When determining that an instruction to limit the luminance is input (step S108, YES), the video processing unit 174 proceeds to processing of step S109. When determining that an instruction to limit the luminance is not input (step S108, NO), the video processing unit 174 proceeds to processing of step S110.

(Step S109) The video processing unit 174 displays the video data on the display unit 15 with the luminance according to a specified upper limit value of the luminance. Then, the procedure proceeds to processing of step S101.

(Step S110) In a case where the instruction to limit the luminance is not input, that is, there is an instruction to perform display by the SDR, the video processing unit 174 displays the video data by the SDR on the display unit 15. Then, the procedure proceeds to processing of step S101.

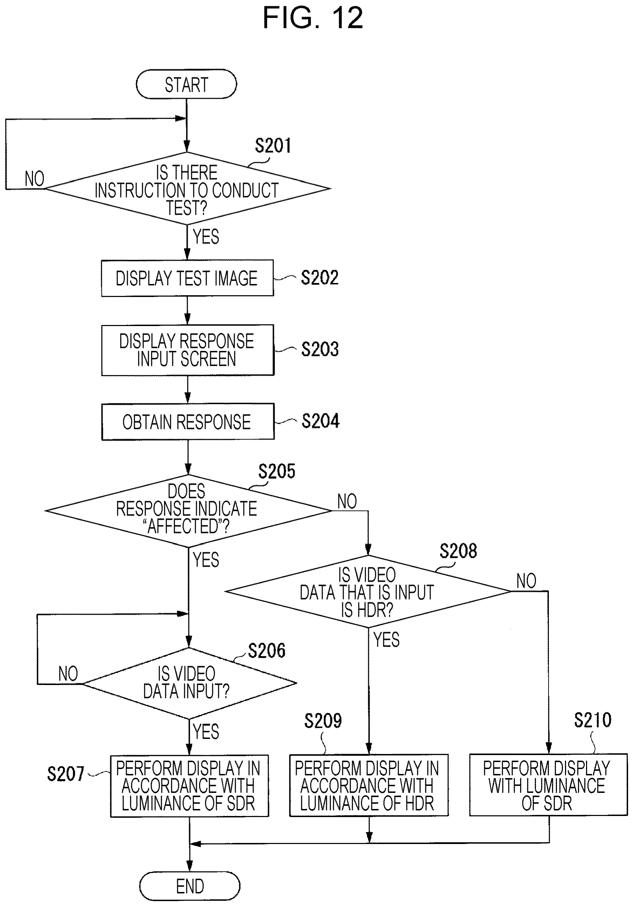

Next, processing for performing display according to a response to a test video according to the present embodiment will be described. Fig. 12 is a flowchart indicating processing for performing display according to a response to a test video according to the present embodiment.

(Step S201) The display control unit 177 determines whether or not an instruction to display a test video is input from the input unit 12. In a case where it is determined that an instruction to display a test video is input (step S201, YES), the display control unit 177 outputs an instruction to display a test video to the video processing unit 174. Then, the procedure proceeds to processing of step S202.

(Step S202) When the instruction to display a test video is input, the video processing unit 174 causes the display unit to display a test video. Then, the procedure proceeds to processing of step S203. The test video may be stored in the storage unit 16 in advance and read out to be displayed.

(Step S203) When the test video is displayed, the display control unit 177 outputs, to the video processing unit 174, an instruction to display a response input screen. In accordance with the instruction to display a response input screen, the video processing unit 174 displays a response input screen on the display unit 15. The response input screen may be displayed after display of the test video is finished or displayed with the test video. In a case of being displayed with the test video, the response input screen may be displayed in an area, in which the test video is not displayed, in a display area of the display unit 15 or may be displayed in a part of an area where the test video is displayed. Then, the procedure proceeds to processing of step S204.

(Step S204) The input unit 12 obtains a response input from the viewer. Then, the procedure proceeds to processing of step S205.

(Step S205) In a case where the response input to the input unit 12 is information indicating "affected" (step S205, YES), the level control unit 179 instructs the video processing unit 174 not to perform HDR control for switching to the HDR. Then, the procedure proceeds to processing of step S206. On the other hand, in a case where the response input to the input unit 12 is not information indicating "affected", that is, in a case of "not affected" (step S205, NO), the level control unit 179 instructs the video processing unit 174 to perform HDR control. Then, the procedure proceeds to processing of step S208.

(Step S206) The video processing unit 174 determines whether or not video data is input from the separation unit 172, and when video data is not input (step S206, NO), the procedure proceeds to step S207 again after a certain time has lapsed. On the other hand, when video data is input from the separation unit 172 (step S206, YES), the video processing unit 174 proceeds to processing of step S207.

(Step S207) On the basis of the instruction not to perform HDR control, the video processing unit 174 displays the input video data on the display unit 15 in accordance with the luminance of the SDR.

(Step S208) The video processing unit 174 determines whether or not a luminance range of the input video data is the HDR. In a case where the luminance range of the video data is the HDR (step S208, YES), the procedure proceeds to processing of S209, and in a case where the luminance range of the video data is not the HDR (step S208, NO), the procedure proceeds to processing of S210.

(Step S209) In a case where the luminance range of the input video data is the HDR, the video processing unit 174 causes the display unit 15 to display the video data by the HDR.

(Step S210) In a case where the luminance range of the input video data is not the HDR, that is, in a case of the luminance range of the SDR (step S208, NO), the video processing unit 174 causes the display unit 15 to display the input video data by the SDR.

Next, an example of information displayed on the display unit 15 of the reception device 10 will be described.

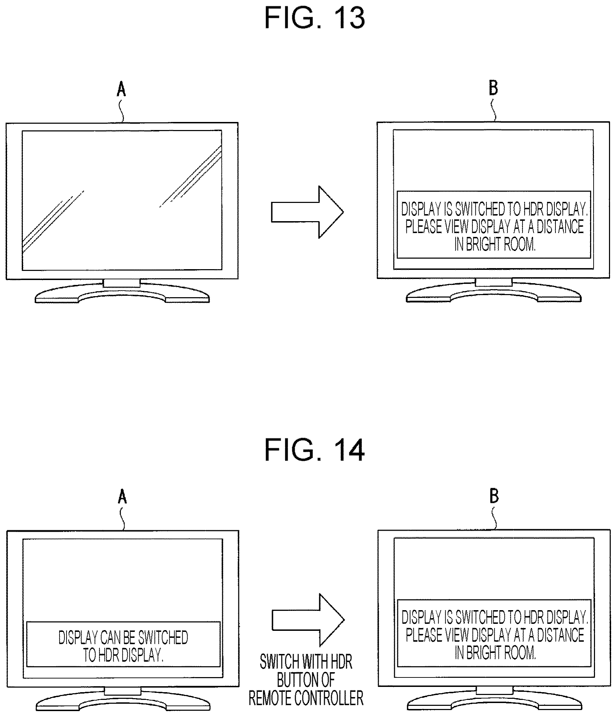

Fig. 13 is a conceptual view for explaining an example of information displayed on the display unit 15.

The video processing unit 174 displays video data by the SDR on the display unit 15 (sign A in Fig. 13), and in a case where a luminance range of the video data is switched to the HDR, the video processing unit 174 displays the video data by the HDR and displays, on the display unit 15, a message of "Display is switched to HDR display. Please view the display at a distance in a bright room." (sign B in Fig. 13). The display is performed upon input of HDR video data while the video data is displayed by the SDR, for example. That is, in a case where an instruction indicating that SDR display may be switched to HDR display is received in advance from the input unit 12, when the input video data is switched from SDR video data to HDR video data, a message as indicated by the sign B in Fig. 13 is displayed for a certain time while the video data is displayed by the HDR.

Thereby, the viewer is able to be notified that the display is switched to HDR display. By viewing the notification, the viewer is able to easily grasp that the luminance range of the video data is switched to the HDR.

Fig. 14 is a conceptual view for explaining an example of information displayed on the display unit 15.

The video processing unit 174 displays video data by the SDR on the display unit 15 (sign A in Fig. 14), and displays a message of "Display can be switched to HDR display." as a luminance range of video data that is input is switched from the SDR to the HDR. When the message is confirmed by the viewer and an instruction to switch the SDR display to the HDR display is input, the video processing unit 174 displays, for example, a message of "Display is switched to HDR display. Please view the display at a distance in a bright room." for a certain time while displaying the video data by the HDR. Thereby, the viewer is able to perform switching to the HDR after deciding to perform switching to the HDR by himself/herself.

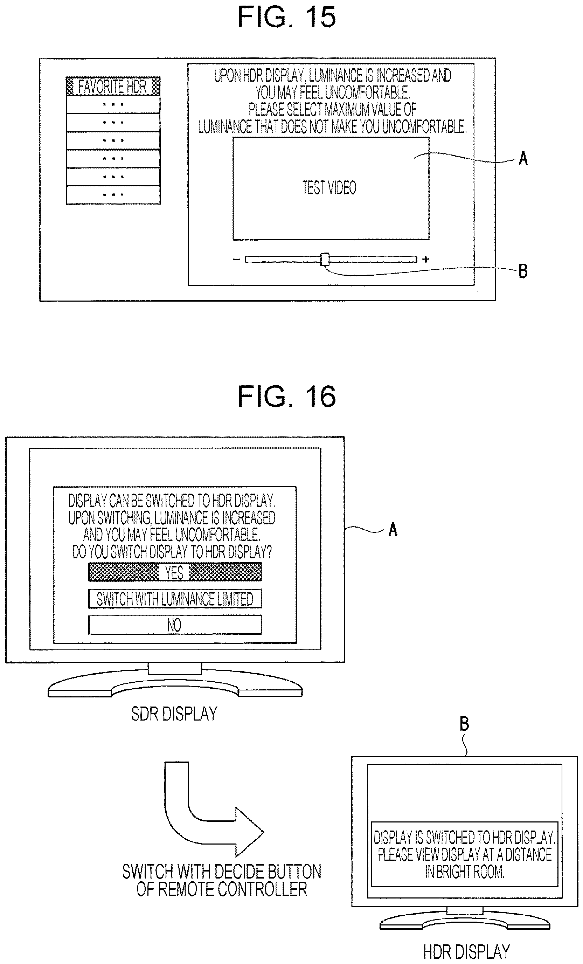

Fig. 15 is a view for explaining a case where luminance when HDR video data is displayed is decided in accordance with an instruction of the viewer.

When an instruction to set luminance when video data is displayed by the HDR is input during initial setting or in a setting menu of the reception device 10, the video processing unit 174 displays, on the display unit 15, a video for setting luminance (sign A in Fig. 15) that is, for example, a scenery video and an adjustment volume by which adjustment to increase or reduce the luminance (widen or narrow the luminance range) is able to be performed. As the video for setting luminance, a moving image in which the luminance changes may be used instead of the scenery video. When a knob (sign B in Fig. 15) is operated via the input unit 12, the video processing unit 174 performs display on the display unit 15 by increasing or reducing, in accordance with operation content thereof, the luminance of the video for setting luminance. In a case where an instruction to complete setting is input when the viewer presses a decide button or the like of the control device RC, the level control unit 179 specifies, with respect to the video processing unit 174, the luminance corresponding to a position of the knob as an upper limit value of the luminance when performing display by the HDR. Here, it is able to be assumed that a left end of the adjustment volume is a luminance range in the SDR, a right end is the luminance range in the HDR, and a maximum value in a luminance range corresponding to a position therebetween is an upper limit value of the luminance.

Thereby, the viewer is able to set the upper limit value of the luminance by moving the knob with the adjustment volume so as to achieve luminance for preference of the viewer while actually viewing the luminance of the video by the video for setting luminance.

Fig. 16 is a view for explaining a case where HDR video data is displayed with a set upper limit value of luminance.

In a case where HDR video data is input while SDR video data that is input is displayed, the video processing unit 174 displays notification information on the display unit 15 while displaying the HDR video data by the SDR. As the notification information, for example, a message of "Display can be switched to HDR display. Upon switching, luminance is increased and you may feel uncomfortable. Do you switch display to HDR display?" and selection choices to select whether or not to perform switching are displayed here. There are three types of selection choices; "yes" indicating to perform display by the HDR, "switch with luminance limited" by which the HDR video data is displayed in a range that is wider than the luminance range of the SDR and narrower than the luminance range of the HDR, and "no" indicating not to perform switching to the HDR. In accordance with any one instruction that is selected from among the selection choices, the video processing unit 174 displays the HDR video data on the display unit 15. Here, in a case where "switch with luminance limited" is selected, the video processing unit 174 displays the video data in accordance with the upper limit value of the luminance that is set by using the adjustment volume described in Fig. 15. Note that, the video processing unit 174 may use either an upper limit value that is stored in advance in the storage unit 16 or luminance indicating an upper limit value that is included in service information and transmitted with the video data.

When either "yes" or "switch with luminance limited" is selected, the video processing unit 174 displays a message of "Display is switched to HDR display. Please view the display at a distance in a bright room." for a certain time (sign B in Fig. 16) while displaying the HDR video data in accordance with the luminance of the HDR or the upper limit value of the luminance.

As a result, when selecting "yes", the viewer is able to view the HDR video data by the HDR. When selecting "switch with luminance limited", the viewer is able to perform viewing in a luminance range in which a minimum value of the luminance range is a minimum value of the luminance range of the SDR and a maximum value of the luminance range is any luminance between a maximum value in the luminance range of the HDR and the maximum value of the luminance range of the HDR. In this manner, the viewer is able to select whether to perform display in accordance with an upper limit value of the luminance or perform display by the SDR and then view video data according to the selected luminance.

Note that, in the setting menu or initial setting, the video processing unit 174 may allow setting about whether or not to limit the luminance during HDR control, indicate "Display can be switched to HDR display. Though setting to limit luminance is performed, luminance is increased upon switching and you may feel uncomfortable. Do you switch display to HDR display?" as a guide sentence of Fig. 16, and display "yes" and "no" as selection choices, and when "yes" is selected, the video processing unit 174 may perform control to switch the display with the luminance limited.

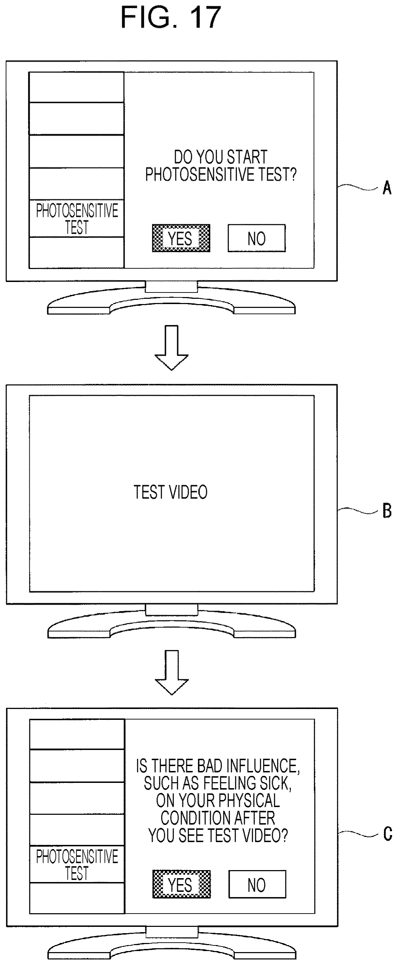

Fig. 17 is a view for explaining a case where a reaction of the viewer to photic stimulation is obtained.

The video processing unit 174 causes the display unit 15 to display a screen to make an inquiry concerning whether or not to conduct a photosensitive test in the setting menu of the reception device 10 or during initial setting (sign A in Fig. 17). When "no" to instruct not to conduct the photosensitive test is selected by the viewer who views the inquiry screen, the photosensitive test is not conducted. On the other hand, when "yes" is selected, the video processing unit 174 displays a test video on the display unit 15 (sign B in Fig. 17). The test video is, for example, video data in at least a part of which display is performed with luminance which is almost the same as the luminance when display is performed by the HDR, and is video data whose reproduction time is a few tens of seconds or a few minutes. The test video may be stored in the storage unit 16 in advance. When display of the test video is finished, the video processing unit 174 displays a message (for example, such as "Is there bad influence, such as feeling sick, on your physical condition after you see a test video?") to obtain a response of the viewer to the test video and selection choices (sign C in Fig. 17). When "yes" is selected by the viewer from among the selection choices, the level control unit 179 instructs the video processing unit 174 not to perform HDR display. Thereby, even when HDR video data is input, the video data is displayed not by the HDR but by the SDR. On the other hand, when "no" is selected, the level control unit 179 instructs the video processing unit 174 to display the HDR video data by the HDR. The HDR video data is displayed with the luminance (or an upper limit value of the luminance) of the HDR.

As a result, the viewer is able to check in advance whether or not there is a possibility that the viewer is affected by photosensitivity, and, in accordance with a result thereof, decide whether or not to perform display with the luminance of the HDR.

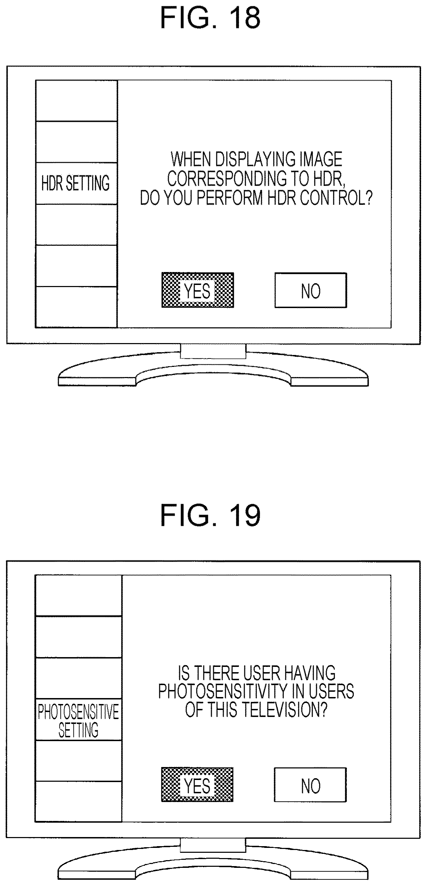

Fig. 18 is a view for explaining a case where whether or not to perform display with the luminance of the HDR is set in the setting menu of the reception device 10 or initial setting. In the setting menu or initial setting, the video processing unit 174 displays, on the display unit 15, a message (for example, such as "When displaying an image corresponding to HDR, do you perform HDR control?") to make an inquiry concerning whether to perform HDR control and selection choices (Fig. 18). When "yes" is selected, the level control unit 179 outputs an instruction to display HDR video data with the luminance of the HDR to the video processing unit 174, and when "no" is selected, outputs an instruction to display the HDR video data with the luminance of the SDR to the video processing unit 174. By performing such setting, when HDR video data is input after that, without selecting whether or not to perform display by the HDR each time input is performed, the viewer is able to view the HDR video data with the luminance corresponding to the HDR.

Fig. 19 is a view for explaining a case where an inquiry concerning whether or not there is a viewer who has photosensitivity among users of the reception device 10 is made.

In the setting menu or initial setting, the video processing unit 174 displays, on the display unit 15, a message (for example, such as "Is there a user having photosensitivity in users of this television?") to make an inquiry concerning whether or not there is a viewer having photosensitivity in users of the reception device 10 and selection choices (Fig. 19). When "yes" is selected, the level control unit 179 outputs an instruction to display HDR video data with the luminance of the SDR to the video processing unit 174, and when "no" is selected, outputs an instruction to display the HDR video data with the luminance of the HDR to the video processing unit 174. By performing such setting, when HDR video data is input after that, without selecting whether or not to perform display by the HDR each time input is performed, the viewer is able to view the HDR video data with the luminance corresponding to the SDR.

Though description has been given above by taking a case where the reception device 10 mainly displays a video of a broadcast program based on video data that is carried by a broadcast signal as an example, the aforementioned control of the luminance range may be applied to a case where a video based on video data recorded in the storage unit 16 in advance is displayed. In this case, instead of an input of video data and service information corresponding to the video data from the separation unit 172, in accordance with an input of an operation signal indicating an instruction of recording reproduction from the input unit 12, the video processing unit 174 reads out video data and service information from the storage unit 16. In this case, the SI processing unit 176 also acquires the service information stored in the storage unit 16, instead of an input of the service information from the separation unit 172.

Though description has been given above for a case where luminance information is transmitted with video data, before video data of the HDR is transmitted, luminance information for the video data may be transmitted.

Though description has been given for a case where the luminance is controlled upon switching of video data in the reception device 10 described above, when the viewer changes a channel during viewing, whether or not a luminance range of video data after the channel changes is higher than a reference value may be determined. Alternatively, when power of the reception device 10 is turned on, whether or not a luminance range of video data of a channel that is selected as a display target is higher than a reference value may be determined.

Though description has been given for a case where the luminance is used as luminance information in the reception device 10 described above, a contrast ratio may be used. In this case, any value of the contrast ratio is used as the reference value. An upper limit value of the contrast ratio is used as an upper limit value of the luminance.

Note that, various numerical values in the aforementioned embodiment are merely examples and the values are not limited. For example, the numerical values such as 50% and 100% as the signal levels and 300 cd/m² and 6000 cd/m² as the luminance that are illustrated in Fig. 2 may be other numerical values (for example, 70% and 100% as the signal levels and 800 cd/m² and 6000 cd/m² as the luminance). For example, the numerical values such as 100 cd/m² and 2000 cd/m² as the luminance that are illustrated in Fig. 14 may be other numerical values (for example, 75 cd/m² and 1500 cd/m² as the luminance).

Note that, though description has been given in the aforementioned embodiment for an example in which the broadcast system 1 uses the MMT system as the media transport system, there is no limitation thereto. The broadcast system 1 may use a media transport system, for example, such as an MPEG-2 TS system or an RTP (Real-time Transport Protocol) system.

According to the reception device 10 described above, in a case where a luminance range is changed so as to achieve a high maximum value of the luminance when video data is displayed, notification information is displayed, thus making it possible to draw an attention of the viewer. By displaying the notification information, it is possible to draw an attention of the viewer so that the viewer views video data that is displayed by securing an appropriate visual range and appropriate brightness of a room according to a luminance range of the video data. Since a test video is displayed so that a reaction of the user to photic stimulation or photosensitivity for the test video is obtained, it is possible for the viewer to grasp in advance whether or not there is a possibility that his/her physical condition is affected, and decide a luminance range. The viewer is also allowed to be reminded that the viewer needs to take care when a child or the like performs viewing by the HDR.

The reception device 10 in the aforementioned embodiment may be realized by a computer. In this case, the reception device 10 may be realized by recording a program for realizing functions thereof on a computer-readable recording medium and causing a computer system to read the program recorded on the recording medium for execution. Note that, the "computer system" here is defined to include an OS and hardware components such as a peripheral device. Furthermore, the "computer-readable recording medium" refers to a portable medium such as a flexible disk, a magneto-optical disk, a ROM, and a CD-ROM, and a storage device such as a hard disk built into the computer system. Moreover, the "computer-readable recording medium" may include a medium that dynamically retains the program for a short period of time, such as a communication line that is used to transmit the program via a network such as the Internet or via a communication line such as a telephone line, and a medium that retains, in that case, the program for a certain time period, such as a volatile memory within the computer system which serves as a server or a client. Furthermore, the program may be configured to realize a part of the functions described above, and additionally may be configured to be capable of realizing the functions described above in combination with a program already recorded in the computer system, and may be configured to be realized by a programmable logic device such as an FPGA (Field Programmable Gate Array).

As above, the embodiment of the invention has been described in detail above with reference to the drawings, but the specific configuration is not limited to the embodiment and includes, for example, a design that falls within the gist of the invention. Reference Signs List

- 1: broadcast system
- 10: reception device
- 11: broadcast reception unit
- 12: input unit
- 14: amplification unit
- 15: display unit
- 16: storage unit
- 17: control unit
- 171: demodulation unit
- 172: separation unit
- 173: sound processing unit
- 174: video processing unit
- 175: display processing unit
- 176: SI processing unit
- 177: display control unit
- 178: channel tuning unit
- 179: level control unit
- 20: transmission device
- 210: service information acquisition unit
- 220: broadcast content acquisition unit
- 230: multiplexing unit
- 240: modulation unit
- 250: transmission unit
- BT: broadcasting transmission path
- BS: broadcast satellite
- RC: control device

## Claims

1. A reception device comprising:
an acquisition unit that acquires, from service information of content, luminance information of a video included in the content;
a luminance determination unit that determines, on a basis of the luminance information, whether or not luminance of the content is higher than a reference value;
a notification information generation unit that generates, in a case where the luminance is higher than the reference value as a result of determination of the luminance determination unit, notification information that is information about the luminance; and
an output unit that outputs the notification information.

2. The reception device according to claim 1, comprising
a video processing unit that, when an instruction to increase an upper limit value of luminance with which the content is displayed is input after the notification information is output, causes a display unit to display the content with the luminance according to the instruction.

3. The reception device according to claim 1 or 2, wherein
the reference value is decided on a basis of at least one of an input performed by a user via an input unit and information indicating an upper limit value of luminance with which content is displayed.

4. The reception device according to claim 3, wherein
information for specifying the upper limit value of the luminance with which the content is displayed is included in the service information.

5. The reception device according to any one of claims 2 to 4, wherein
the notification information includes information for making an inquiry concerning whether or not to limit the luminance with which the content is displayed to defined luminance, and
when an instruction indicating the limit is input, the video processing unit causes the display unit to display the content within the defined luminance.

6. The reception device according to claim 5, wherein
the defined luminance is decided on a basis of an input performed by a user via the input unit or information included in the service information.

7. The reception device according to any one of claims 1 to 6, comprising:
a test video display control unit that displays a test video for obtaining a reaction of a user to photic stimulation or photosensitivity received from a video that is displayed; and
a test response acquisition unit that acquires a response of a user to the test video, wherein
in a case where the response acquired by the test response acquisition unit is a response indicating that content with luminance higher than the reference value is able to be viewed, the video processing unit causes the display unit to display the content with luminance higher than the reference value.

8. A reception device comprising:
a test video display control unit that displays a test video for obtaining a reaction of a user to photic stimulation or photosensitivity received from a video that is displayed;
a test response acquisition unit that acquires a response of a user to the test video, and
a video processing unit that causes a display unit to display content in accordance with luminance according to whether or not to display the content with luminance higher than a reference value, in accordance with the response acquired by the test response acquisition unit.

9. A reception method in a reception device, the reception method comprising the steps of:
acquiring, from service information of content, luminance information of a video included in the content;
determining, on a basis of the luminance information, whether or not luminance of the content is higher than a reference value;
generating, in a case where the luminance is higher than the reference value as a result of determination at the determining, notification information that is information about the luminance; and
outputting the notification information.

10. A program causing a computer of a reception device to execute the steps of:
acquiring, from service information of content, luminance information of a video included in the content;
determining, on a basis of the luminance information, whether or not luminance of the content is higher than a reference value;
generating, in a case where the luminance is higher than the reference value as a result of determination at the determining, notification information that is information about the luminance; and
outputting the notification information.
